# EUROPEAN PATENT APPLICATION

(11) **EP 1 599 010 A1**
(43) Date of publication of application: **23.11.2005**
(21) Application number: 04709752.2
(22) Date of filing: 10.02.2004
(51) Int. Cl.: H04L 29/06, H04Q 7/38

(54) **PROTOCOL CONVERSION DEVICE AND METHOD**

(30) Priority: 26.02.2003 JP 2003048411
(71) Applicant: NEC CORPORATION, Minato-ku, Tokyo 108-8001 (JP)
(72) Inventor: SAKATA, Masayuki, c/o NEC CORPORATION, Tokyo 108-8001 (JP); KOJIMA, Masahiko, c/o NEC CORPORATION, Tokyo 108-8001 (JP)
(74) Representative: Glawe, Delfs, Moll
(86) International application number: PCT/JP2004/001407
(87) International publication number: WO 2004/077792

(57) **Abstract**

An IWF device (3) is divided into an IWF-c (31) as a C plane device controlling signaling and an IWF-u (32, 33) as a U Plane device controlling user data. Thus, it is possible to constitute configuration having flexible scalability.

## Description

### Technical Field

The present invention relates to a protocol conversion device and method and, more particularly, to a protocol conversion device and method which are applied when devices using different physical lines are connected.

### Background Art

The protocol architecture of a radio interface in a WCDMA (Wideband CDMA) system includes a physical layer (layer 1), data link layer (layer 2), and network layer (layer 3). Layer 2 has a C-Plane for signalling of transferring a control signal, and a U-Plane for transferring user information.

In connecting devices using different physical lines, an IWF (Inter Working Function) device is applied as a protocol conversion device. The configuration of a conventional IWF device is not divided into the C-Plane and U-Plane (see, e.g., reference 1 (3GPP TR25.933 V5.2.0 (2002-09)).

For this reason, if the configuration is actually divided into the C-Plane and U-Plane, a problem occurs in the resource reservation method of how to terminate each protocol and how to acquire a parameter for reserving a resource. This inhibits the use of a configuration with high scalability for increasing/decreasing the U-Plane. No resource reservation is described in reference 1.

### Disclosure of Invention

The present invention has been made to overcome the conventional drawbacks, and has as its object to provide a protocol conversion device and method which can adopt a configuration with high scalability.

To achieve the above object, according to the present invention, a protocol conversion device which is connected between a first device and a second device that use different physical lines is characterized by comprising a C-Plane device which controls signalling between the first device and the second device, and a U-Plane device which controls transfer of user data between the first device and the second device.

Also, according to the present invention, a protocol conversion method applied when a first device and a second device that use different physical lines are connected is characterized by comprising the first step of controlling signalling between the first device and the second device by a C-Plane device, and the second step of controlling transfer of user data between the first device and the second device by a U-Plane device which is arranged independently of the C-Plane device.

### Brief Description of Drawings

Fig. 1 is a block diagram showing the configuration of an IWF device according to the first embodiment;
Fig. 2 is a block diagram showing the configurations of an IWF-c and IWF-u in Fig. 1;
Fig. 3 is a view showing the protocol stack of the C-Plane according to the first embodiment;
Fig. 4 is a sequence chart showing operation upon issuing a CS call according to the first embodiment;
Fig. 5 is a sequence chart showing operation upon issuing a PS call according to the first embodiment;
Fig. 6 is a flowchart showing operation of the IWF-c in Fig. 1;
Fig. 7 is a flowchart showing operation of the IWF-c in Fig. 1;
Fig. 8 is a flowchart showing operation of the IWF-u in Fig. 1;
Fig. 9 is a flowchart showing operation of.the IWF-u in Fig. 1;
Fig. 10 is a block diagram showing the configuration of an IWF device according to the second embodiment;
Fig. 11 is a block diagram showing the configurations of an IWF-c and IWF-u in Fig. 10;
Fig. 12 is a view showing the protocol stack of the C-Plane according to the second embodiment;
Fig. 13 is a sequence chart showing operation upon issuing a CS call according to the second embodiment;
Fig. 14 is a sequence chart showing operation upon issuing a PS call according to the second embodiment; and
Fig. 15 is a flowchart showing operation of the IWF-u in Fig. 10.

### Best Mode for Carrying Out the Invention

Embodiments of the present invention will be described below with reference to the accompanying drawings.

### First Embodiment

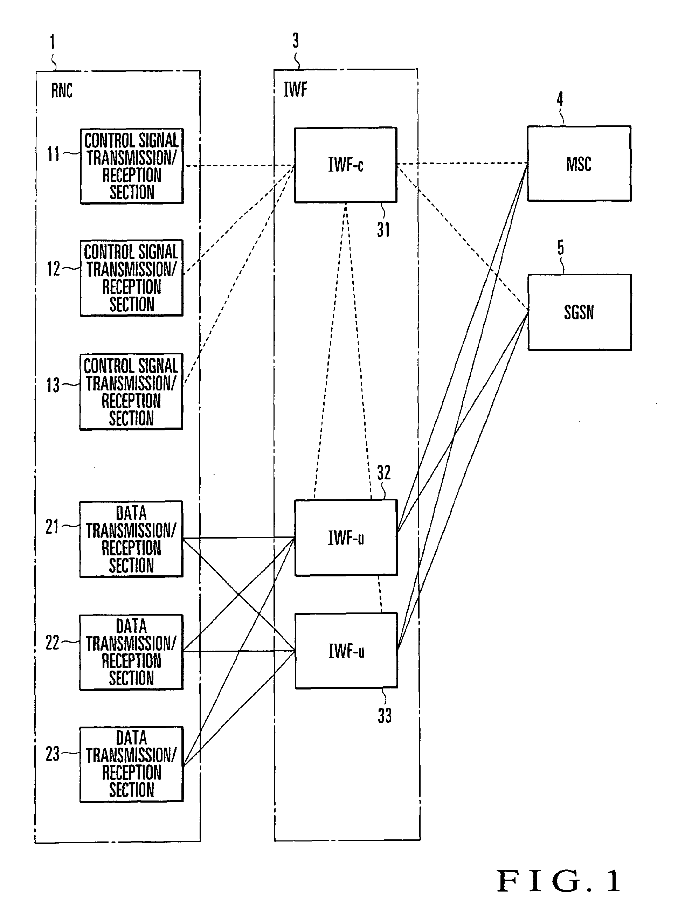

Fig. 1 is a block diagram showing the configuration of an IWF (Inter Working Function) device as a protocol conversion device according to the first embodiment of the present invention. In Fig. 1, an IWF device 3 comprises an IWF-c 31 which mainly performs signalling control, and IWF-us 32 and 33 which mainly perform transfer of user data. The IWF-c 31 corresponds to the C-Plane for signalling of transferring a control signal, whereas the IWF-us 32 and 33 correspond to the U-Plane for transferring user information. Note that signalling means a process of connecting a line, and user information is a packet which flows through a line connected by signalling.

The IWF device 3 is connected between an MSC (Mobile Switching Center) 4 or an SGSN [Serving GPRS (General Packet Radio Service) Support Node] 5 serving as the first device, and an RNC (Radio Network Controller: base station control device) 1 serving as the second device. The IWF device 3 and the MSC 4 or SGSN 5 are connected by an ATM (Asynchronous Transfer Mode) Transport protocol stack which is defined by 3GPP (3rd Generation Partnership Projects) Release 99. The IWF device 3 and RNC 1 are connected by an IP (Internet Protocol) Transport protocol stack which is defined by 3GPP Release 5. These protocol stacks are described as Iu interfaces in detail in reference 2 (3GPP TS25.412 V5.1.0 (2002-09)) and the like.

The IWF-c 31 of the IWF device 3 converts an ATM Transport protocol stack and IP Transport protocol stack in signalling. The IWF-us 32 and 33 of the IWF device 3 convert an ATM Transport protocol stack and IP Transport protocol stack in user information transfer.

The RNC 1 comprises control signal transmission/reception sections (signalling control devices) 11 to 13 which transmit/receive a control signal, and data transmission/reception sections 21 to 23 which transmit/receive user information.

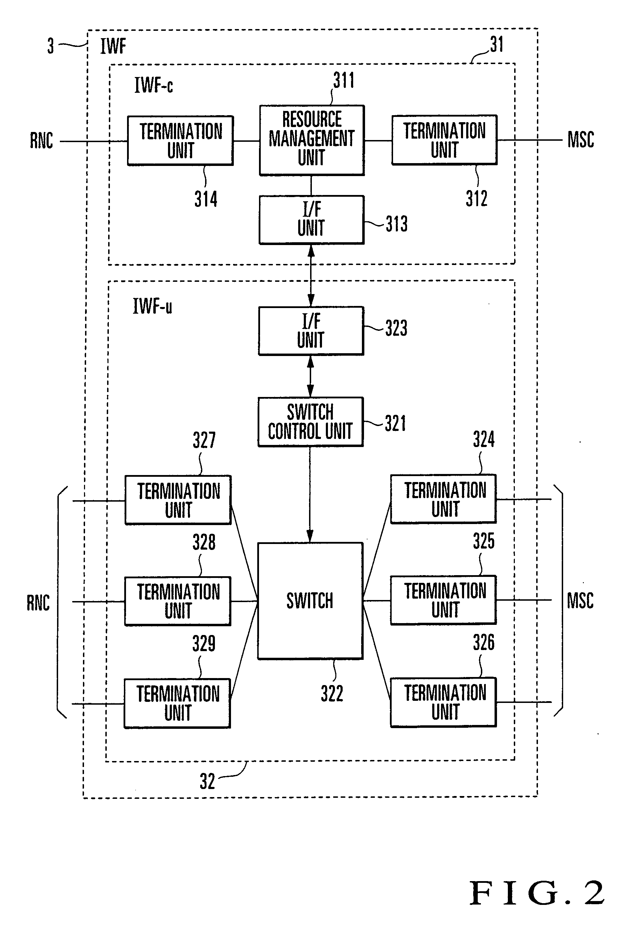

Fig. 2 is a block diagram showing the configurations of the IWF-c 31 and IWF-u 32 in Fig. 1. In Fig. 2, the IWF-c 31 is formed from a resource management unit 311, protocol termination units 312 and 314, and an interface (I/F) unit 313 with the IWF-u 32. The IWF-u 32 is formed from a switch control unit 321, a switch 322, an interface (I/F) unit 323 with the IWF-c 31, protocol termination units 324 to 326 on the ATM side, and protocol termination units 327 to 329 on the IP (Internet Protocol) side.

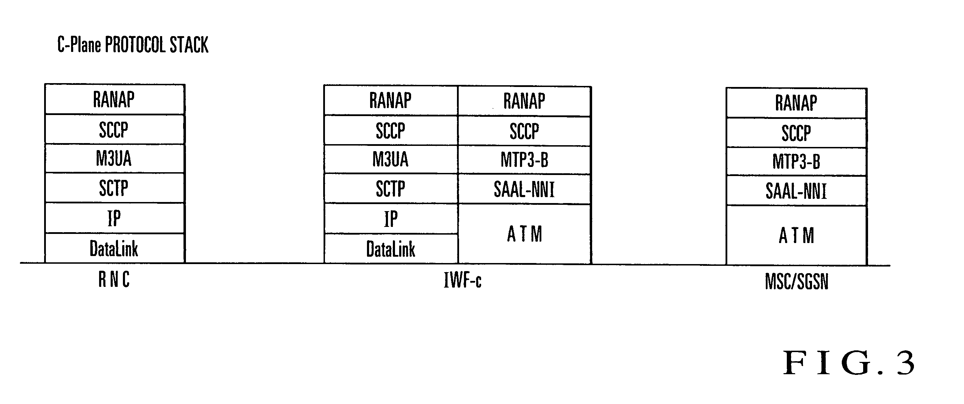

Fig. 3 is a view showing the protocol stack of the C-Plane according to the first embodiment. In Fig. 3, the RNC 1 is made up of a Data link layer, an IP layer, an SCTP (Stream Control Transmission Protocol) layer, an M3UA [SS7 (Signalling System No. 7) MTP3 (Message Transfer Part 3) User Adaptation] layer, an SCCP (Signalling Connection Control Part) layer, and an RANAP (Radio Access Network Application Part) layer.

The IWF-c 31 is formed on the side of the RNC 1 from a Data link layer, IP layer, SCTP layer, M3UA layer, SCCP layer, and RANAP layer, and on the side of the MSC 4 and SGSN 5 from an ATM layer, an SAAL-NNI (Signalling ATM Adaptation Layer-Network Node Interface) layer, an MTP3-B (Message Transfer Part 3-B) layer, an SCCP layer, and an RANAP layer.

Each of the MSC 4 and SGSN 5 is formed from an ATM layer, SAAL-NNI layer, MTP3-B layer, SCCP layer, and RANAP layer.

In this case, one terminal of the SCCP layer is terminated by the IWF device 3. To the contrary, the RANAP layer as the uppermost signalling protocol is terminated between the RNC 1 and the MSC 4 or SGSN 5 though part of the RANAP layer must be determined. Some of messages change in contents about a resource address.

As a result of terminating one terminal of the SCCP layer by the IWF device 3, two SCCP connections are set for one call between the RNC 1 and the IWF and between the IWF and the MSC 4 or SGSN 5. The SCCP layer has, in the resource management unit 311 of the IWF device 3, an SCCP correspondence table for making the two SCCP connections correspond to each other. Based on this table, the IWF device 3 terminates one terminal of the SCCP, recognizes call information, and transmits the call again to a proper destination. A proper transmission/reception section can, therefore, be selected from the control signal transmission/reception sections 11 to 13 in the RNC 1.

Note that the CS (Circuit Switched) call has been described in detail, and the above description can also apply to a PS (Packet Switched) call using the SGSN 5 instead of the MSC 4. The CS call is an audio line call using the MSC 4, and the PS call is a packet communication call using the SGSN 5.

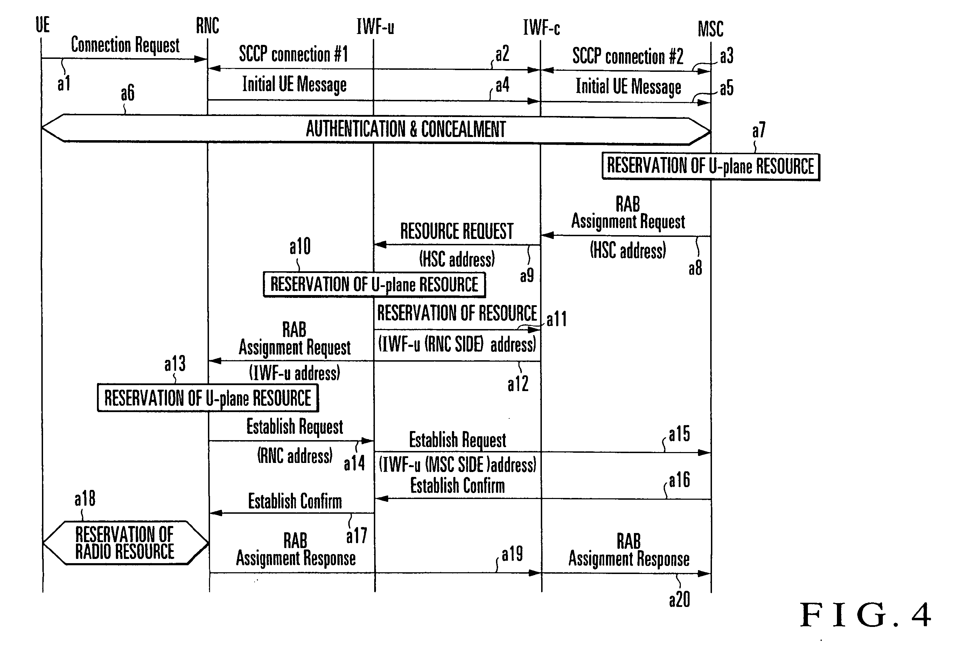

Fig. 4 is a sequence chart showing operation upon issuing a CS call according to the first embodiment. Operation up to reservation of the resource of each device upon issuing a CS call according to the first embodiment will be explained with reference to Fig. 4.

When a UE (User Equipment) transmits "Connection Request" (a1 in Fig. 4) to the RNC 1, a calling sequence starts. When the RNC 1 transmits "Initial UE Message" to the MSC 4, SCCP connections are set between the RNC 1 and the IWF-c 31 and between the IWF-c 31 and the MSC 4 (a2 and a3 in Fig. 4). At this time, the SCCP connection between the RNC 1 and the IWF-c 31 is defined as SCCP connection #1, and that between the IWF-c 31 and the MSC 4 is defined as SCCP connection #2.

The IWF-c 31 only relays "Initial UE Message", migrates the SCCP from SCCP connection #1 to SCCP connection #2, and transmits the SCCP to the MSC 4 (a4 and a5 in Fig. 4). The resource management unit 311 of the IWF-c 31 creates an SCCP correspondence table representing that SCCP connection #1 and SCCP connection #2 are used by the same call. When an SCCP connection is first set by the MSC 4 in Paging or the like, the IWF-c 31 has a function of arbitrarily selecting a control signal transmission/reception section.

In a multi-call during the use of a call, the IWF-c 31 has a means for determining, on the basis of information (e.g., IMSI (International Mobile Subscriber Identity)) unique to a terminal, whether the terminal is in use, and allowing the use of the same control signal transmission/reception section.

After authentication and concealment are performed (a6 in Fig. 4), the MSC 4 reserves a user data resource (a7 in Fig. 4), and transmits, to the RNC 1, "RAB Assignment Request" (first resource request) to reserve a radio resource (a8 in Fig. 4). Upon reception of this message, the IWF-c 31 determines that the resources of the IWF-us 32 and 33 must be reserved. A case wherein the resource of the IWF-u 32 is reserved will be explained.

"RAB Assignment Request" contains the first parameter (e.g., address) used to transfer user data by the MSC 4. The resource management unit 311 of the IWF-c 31 acquires the first parameter from "RAB Assignment Request", adds the first parameter to a resource request (second resource request), and transmits the resource request to the IWF-u 32 (a9 in Fig. 4).

The switch control unit 321 of the IWF-u 32 acquires the first parameter from the received resource request, reserves a user data resource (a10 in Fig. 4), and transmits to the IWF-c 31 a notification that the resource has been reserved (a11 in Fig. 4). This notification contains the second parameter (e.g., the address of the RNC 1) used to transfer user data by the IWF-u 32.

The resource management unit 311 of the IWF-c 31 acquires the second parameter from the received notification. The resource management unit 311 rewrites, with the address of the IWF-u 32, the address of the MSC 4 serving as a user data transfer destination address in "RAB Assignment Request". The resource management unit 311 transfers the rewritten "RAB Assignment Request" to a proper control signal transmission/reception section in the RNC 1 (a12 in Fig. 4). Selection of a proper control signal transmission/reception section utilizes the SCCP correspondence table.

After that, the RNC 1 reserves a user data resource (a13 in Fig. 4). In order to set the U-Plane, the RNC 1 transmits "Establish Request" to the address of the IWF-u 32 which is notified by "RAB Assignment Request" (a14 in Fig. 4). This notification contains the user data address of the RNC 1. Transmission of the notification can utilize IPALCAP (IP Access Link Control Application Protocol).

Upon reception of the notification, the IWF-u 32 transmits "Establish Request" to the MSC 4 by ALCAP (Access Link Control Application Protocol) (a15 in Fig. 4). As the destination of the MSC 4, the address of the MSC 4 that has been notified from the IWF-c 31 in advance is used.

"Establish Confirm" is transmitted as a confirmation message from the MSC 4 to the IWF-u 32 and from the IWF-u 32 to the RNC 1 (a16 and a17 in Fig. 4). Then, a radio resource is reserved between the UE and the RNC 1 (a18 in Fig. 4). When a radio resource is reserved, "RAB Assignment Response" is transmitted from the RNC 1 to the IWF-u 32 and from the IWF-u 32 to the MSC 4, completing setting of a user data transfer path (a19 and a20 in Fig. 4).

By using the set path, user data is transferred.

The same process is also performed when the resource of the IWF-u 33 is reserved.

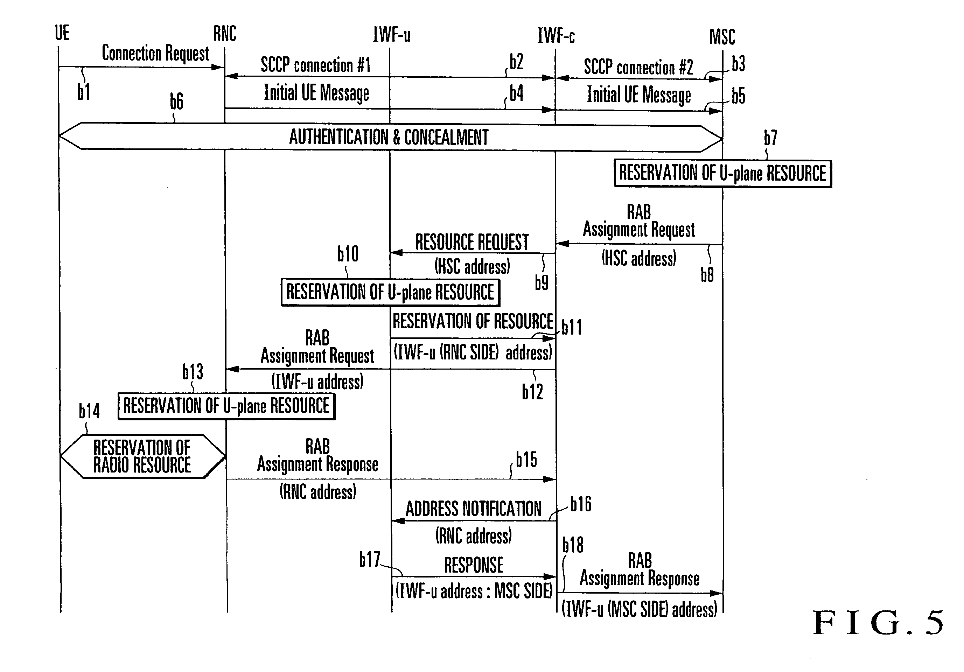

Fig. 5 is a sequence chart showing operation up to reservation of the resource of each device upon issuing a PS call according to the first embodiment. Operation up to reservation of the resource of each device upon issuing a PS call according to the first embodiment will be explained with reference to Fig. 5.

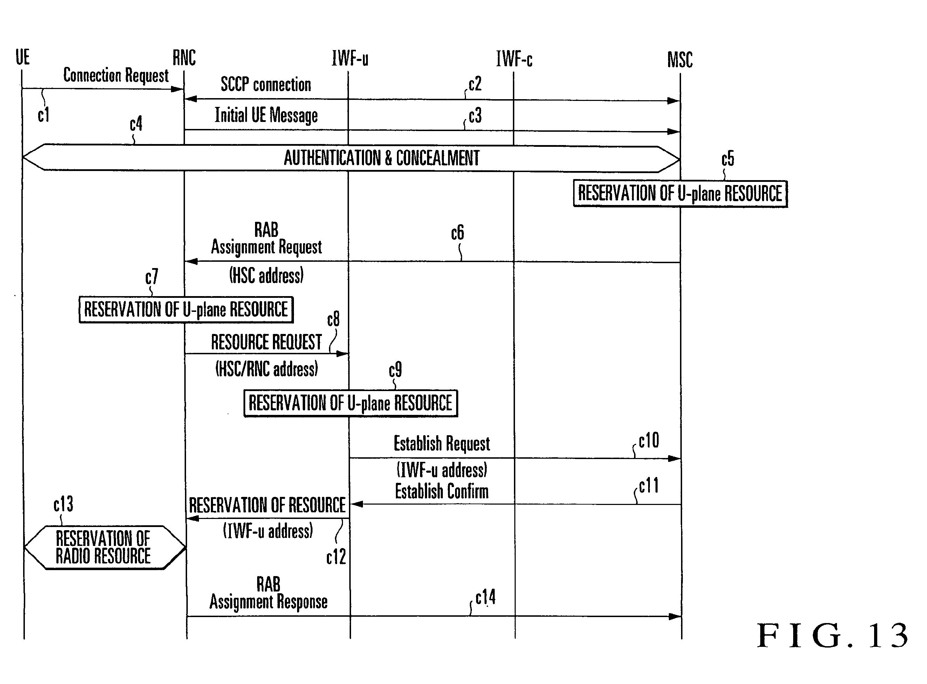

Referring to Fig. 5, operation up to reservation of the resource of each device upon issuing a PS call is almost the same as the above-described operation up to reservation of the resource of each device upon issuing a CS call. That is, operations in b1 to b13 in Fig. 5 are the same as those in a1 to a13 in Fig. 13. However, the PS call does not use either ALCAP or IPALCAP, and thus the last "RAB Assignment Response" is different from that in Fig. 4.

After a radio resource is reserved between the UE and the RNC 1 (b14 in Fig. 5), the IWF-c 31 completes setting of a user transfer path by "RAB Assignment Response" (b15 in Fig. 5). Then, the IWF-c 31 acquires the user data address of the RNC 1 by "RAB Assignment Response", and notifies the IWF-u 32 of the address (b16 in Fig. 5). As the response, the IWF-u 32 notifies the IWF-c 31 of the address of the IWF-u 32 on the side of the MSC 4 (b17 in Fig. 5). The IWF-c 31 acquires the address, and rewrites, with the address of the IWF-u 32, the address of the RNC 1 serving as a user data transfer destination address in "RAB Assignment Response". The IWF-c 31 transmits the rewritten "RAB Assignment Response" to the MSC 4 (b18 in Fig. 5).

At this time, the SCCP connection utilizes the SCCP correspondence table. The SCCP is assigned with a line number so as to confirm each link. For each link number, the SCCP correspondence table stores information representing a correspondence between a link number to the MSC 4 or SGSN 5 and a link number to the RNC 1.

The subsequent process is the same as the above-described process upon issuing a CS call.

The same process is also performed when the resource of the IWF-u 33 is reserved.

A sequence for reserving a resource has been described in detail in the above operations shown in Figs. 4 and 5. A resource can also be freed by the same sequence.

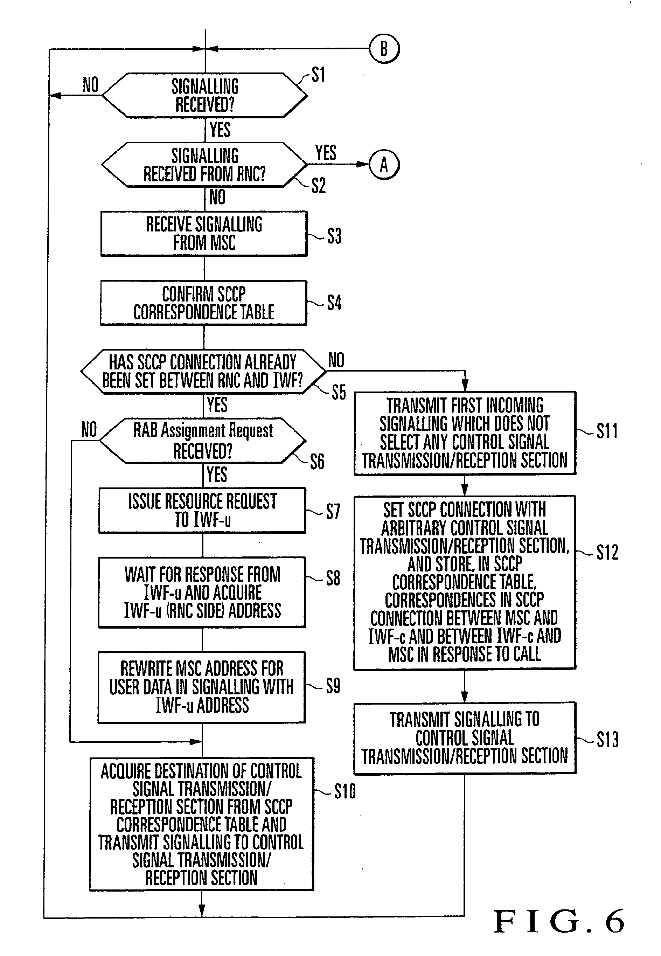

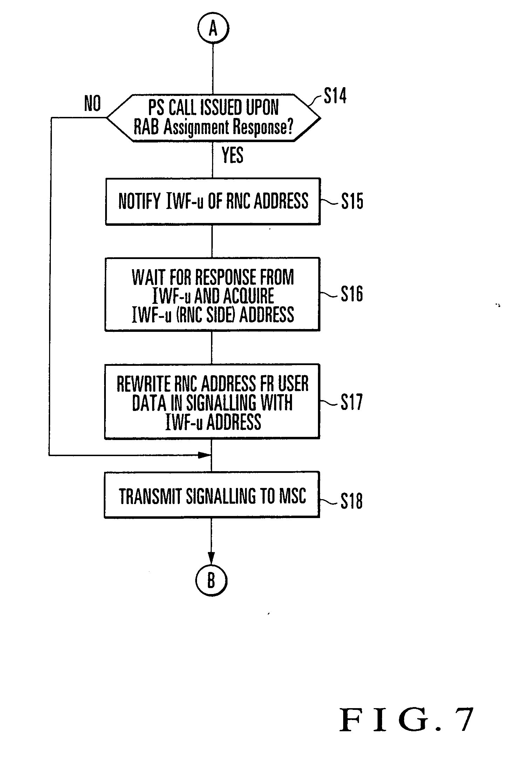

Figs. 6 and 7 are flowcharts showing operation of the IWF-c 31. Operation of the IWF-c 31 in the IWF device 3 will be explained with reference to Figs. 6 and 7.

Upon reception of signalling (step S1 in Fig. 6), the IWF-c 31 determines whether it has received signalling from the RNC 1 or MSC 4 (step S2 in Fig. 6).

For RANAP signalling received from the RNC 1, the IWF-c 31 notifies the IWF-us 32 and 33 of an RNC address (step S15 in Fig. 7) for only "RAB Assignment Response" representing a resource reservation response to a PS call (step S14 in Fig. 7).

The IWF-c 31 waits for responses from the IWF-us 32 and 33, and acquires an IWF-u (RNC 1 side) address (step S16 in Fig. 7). The IWF-c 31 rewrites the RNC address for user data in signalling with the addresses of the IWF-us 32 and 33 (step S17 in Fig. 7), and transmits RANAP signalling to the MSC 4 (step S18 in Fig. 7); otherwise, the IWF-c 31 directly transmits RANAP signalling to the MSC 4 (step S18 in Fig. 7).

Upon reception of the RANAP signalling from the MSC 4 (step S3 in Fig. 6), if no SCCP correspondence table for the number of a control signal transmission/reception section and an SCCP connection has been created upon first RANAP signalling (e.g., Paging) from the MSC 4 (step S4 in Fig. 6), the IWF-c 31 arbitrarily selects a control signal transmission/reception section, and directly transmits RANAP signalling to the control signal transmission/reception section (steps S11 to S13 in Fig. 6).

If no correspondence between an SCCP connection and the number of a control signal transmission/reception section has been created, an SCCP correspondence table is created (step S12 in Fig. 6). The SCCP correspondence table is deleted at the same time as the end of a call (end of the SCCP connection).

The IWF-c 31 determines whether the RANAP signalling is "RAB Assignment Request" to reserve a user data resource (step S6 in Fig. 6). If the RANAP signalling is a request to reserve a user data resource, the IWF-c 31 exchanges signalling with the IWF-us 32 and 33, and reserves the resources of the IWF-us 32 and 33. Thereafter, the IWF-c 31 rewrites, with the addresses of the IWF-us 32 and 33, the address of the MSC 4 serving as the user data transfer destination of RANAP signalling (steps S7 to S9 in Fig. 6), acquires the destination of a control signal transmission/reception section from the SCCP correspondence table, and transmits signalling to the control signal transmission/reception section (step S10 in Fig. 6).

If the request does not reserve a user data resource, the IWF-c 31 transmits RANAP signalling to a proper control signal transmission/reception section without changing RANAP (step S10 in Fig. 6).

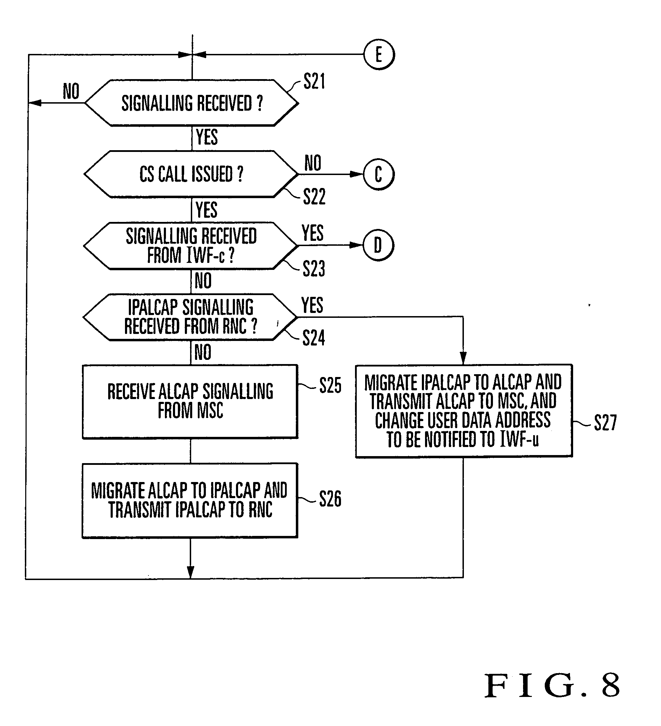

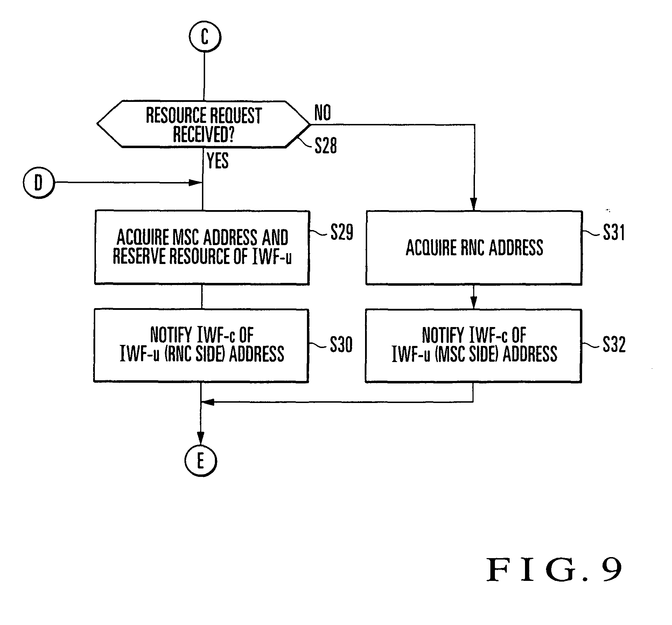

Figs. 8 and 9 are flowcharts showing operation of the IWF-us 32 and 33 in Fig. 1. Operation of the IWF-us 32 and 33 will be explained with reference to Figs. 8 and 9.

Upon reception of resource reservation signalling from the IWF-c 31 (step S23 in Fig. 8 and step S28 in Fig. 9), the IWF-us 32 and 33 reserve their internal resources (step S29 in Fig. 9). The IWF-us 32 and 33 store, in correspondence with their IWF-u addresses, the address of the MSC 4 which has been notified by signalling, and notify the IWF-c 31 of the IWF-u addresses (step S30 in Fig. 9).

Upon reception of signalling from the RNC 1 (step S24 in Fig. 8), the IWF-us 32 and 33 migrate the IPALCAP signalling to ALCAP, and transmit the signalling to a corresponding MSC address (step S27 in Fig. 8).

Upon reception of signalling from the MSC 4 (step S25 in Fig. 8), the IWF-us 32 and 33 migrate the ALCAP signalling to IPALCAP, and transmit the signalling to a corresponding RNC address (step S26 in Fig. 8).

As described above, the IWF-us 32 and 33 convert a protocol by the same user data flow as that for receiving signalling from the RNC 1 or MSC 4.

In this manner, according to the first method, the IWF device 3 is divided into the C-Plane device (IWF-c 31) and the U-Plane device (IWF-us 32 and 33), and the IWF device 3 can employ a configuration with high scalability. More specifically, the IWF-c 31 is not influenced by increasing/decreasing the number of IWF-us 32 and 33.

In the first embodiment, since the IWF device 3 terminates SCCP every call, a plurality of control signal transmission/reception sections 11 to 13 can be installed in the RNC 1. Conventionally, only one control signal transmission/reception section is used as the RNC 1.

In the first embodiment, when the IWF device 3 is divided into the C-Plane device (IWF-c 31) and the U-Plane device (IWF-us 32 and 33), a resource is reserved in the U-Plane device (IWF-us 32 and 33) in response to a request from the C-Plane device (IWF-c 31), distributing the load of the IP traffic using the shortest path.

### Second Embodiment

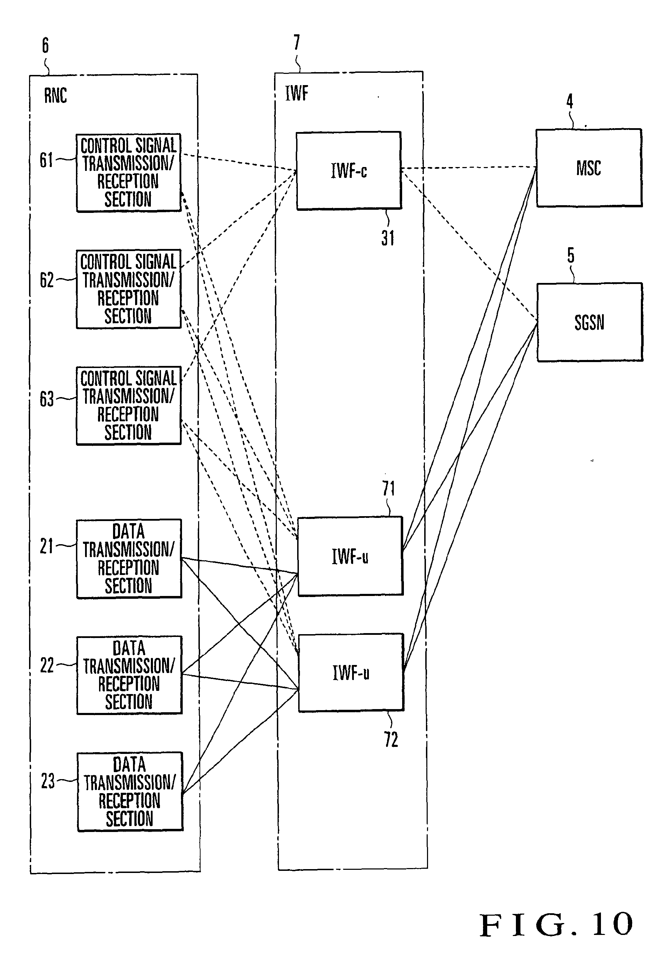

Fig. 10 is a block diagram showing the configuration of an IWF device as a protocol conversion device according to the second embodiment of the present invention. The second embodiment is different from the above-described first embodiment in that in Fig. 10, no signal is transmitted/received between an IWF-c 31 and IWF-us 71 and 72 in an IWF device 7, and the IWF-us 71 and 72 are controlled by control signal transmission/reception sections 61 to 63 of an RNC 6. The same reference numerals as those in the first embodiment denote the same parts.

In the first embodiment, the IWF-c 31 needs to recognize RANAP signalling, and thus must decode all signallings to recognize whether "RAB Assignment Request" exists. To the contrary, in the second embodiment, the resources of the IWF-us 71 and 72 are managed by the control signal transmission/reception sections 61 to 63 in the RNC 6. Hence, the IWF-c 31 need not decode RANAP signalling, reducing the process of the IWF-c 31.

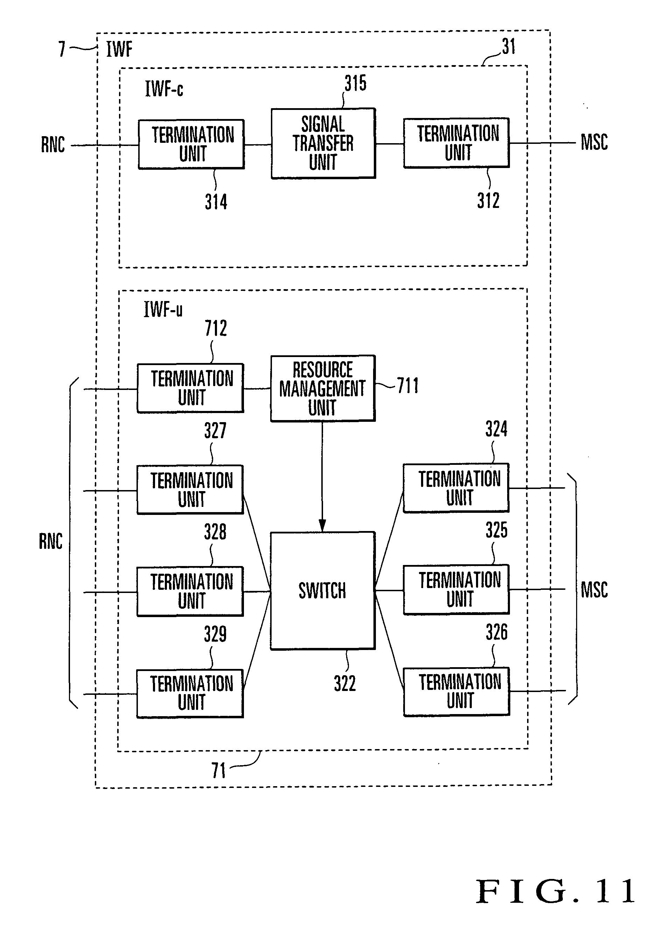

Fig. 11 is a block diagram showing the configurations of the IWF-c 31 and IWF-u 71 in Fig. 10. In Fig. 11, the IWF-c 31 is formed from protocol termination units 312 and 314, and a signal transfer unit 315. The IWF-u 71 is formed from a resource management unit 711, a switch 322, protocol termination units 324 to 326 on the ATM side, and protocol termination units 327 to 329 and 712 on the IP (Internet Protocol) side.

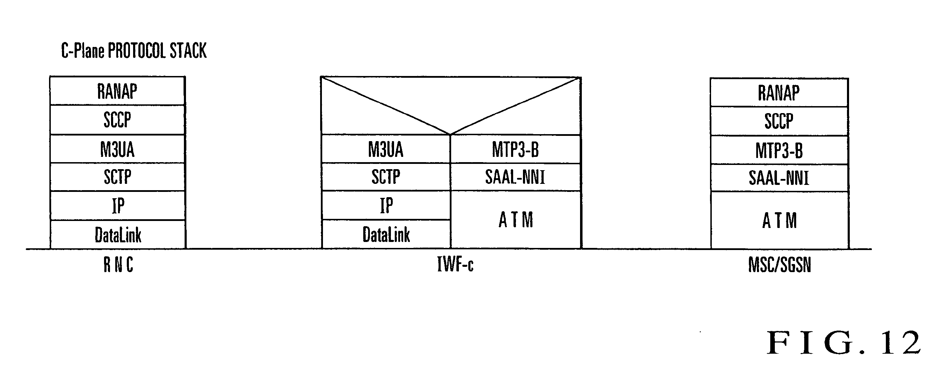

Fig. 12 is a view showing the protocol stack of the C-Plane according to the second embodiment. The second embodiment is different from the above-described first embodiment in that the SCCP layer and RANAP layer in the protocol stack are not terminated by the IWF-c 31. The remaining part is the same as that in the first embodiment.

Fig. 13 is a sequence chart showing operation upon issuing a CS call according to the second embodiment. Operation up to reservation of the resource of each device upon issuing a CS call according to the second embodiment will be explained with reference to Fig. 13.

In Fig. 13, according to the second embodiment, an SCCP connection is terminated between the RNC 6 and the MSC 4, and the IWF-c 31 does not concern the termination. Since a flag for identifying a control signal transmission/reception section used by the RNC 6 is attached in the SCCP connection, the IWF-c 31 can determine the flag to select a proper control signal transmission/reception section.

"RAB Assignment Request" (fourth resource request) transmitted from the MSC 4 reaches the RNC 6 without being concerned by the IWF-c 31 (c6 in Fig. 13). Upon reception of "RAB Assignment Request", the RNC 6 reserves a user data resource (c7 in Fig. 13). The RNC 6 which has reserved the resource transmits to the IWF-u 71 a resource request (third resource request) to reserve the resource of the IWF-u 71 (c8 in Fig. 13). By adding the address of the RNC 6 to the address of an MSC 4 in the resource request, the resource request replaces "Establish Request" of IPALCAP.

The IWF-u 71 acquires the address of the MSC 4 serving as a user data transfer destination, and reserves a user data resource (c9 in Fig. 13). The IWF-u 71 transmits "Establish Request" to the MSC 4 by ALCAP (c10 in Fig. 13). The IWF-u 71 waits for "Establish Confirm" which is sent back to the IWF-u 71 by ALCAP in response to the request (c11 in Fig. 13). Then, the IWF-u 71 notifies the RNC 6 of the address of the IWF-u 71 (c12 in Fig. 13).

The subsequent process is the same as that in the first embodiment.

The same process is also executed when the resource of the IWF-u 72 is reserved.

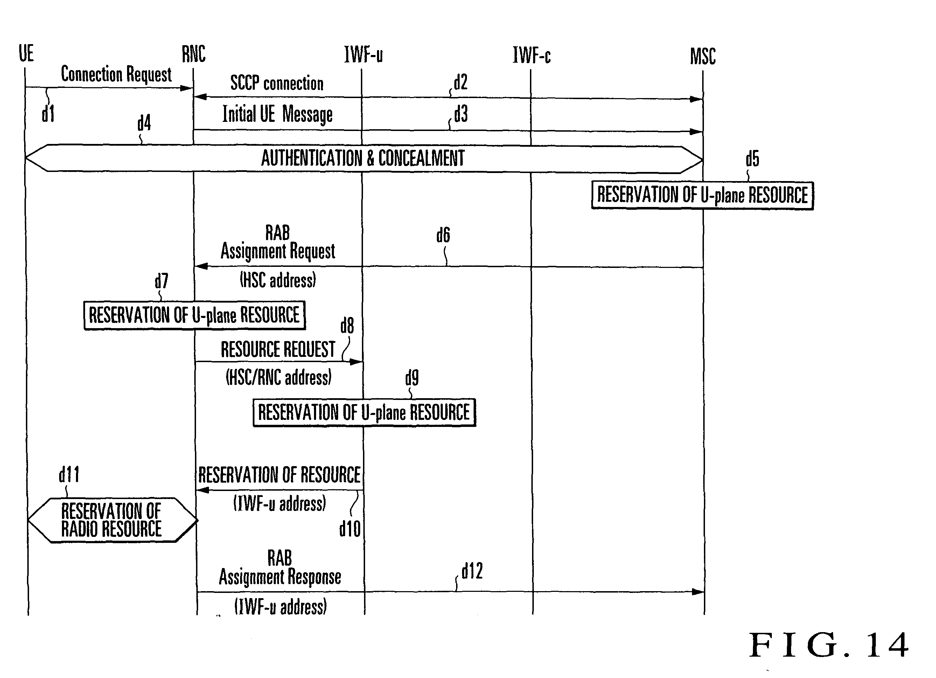

Fig. 14 is a sequence chart showing operation upon a PS call according to the second embodiment. Operation up to reservation of the resource of each device upon issuing a PS call according to the second embodiment will be explained with reference to Fig. 14.

Since the PS call does not use "Establish Request" by ALCAP, no operation need be changed between the CS call and the PS call in "RAB Assignment Response" (d12 in Fig. 14).

In the second embodiment, the IWF-c 31 need not reserve any resource, and the control signal transmission/reception sections 61 to 63 in the RNC 6 reserve resources. The IWF-c 31 can omit the determination step shown in Figs. 6 and 7, and performs only protocol conversion of a lower layer.

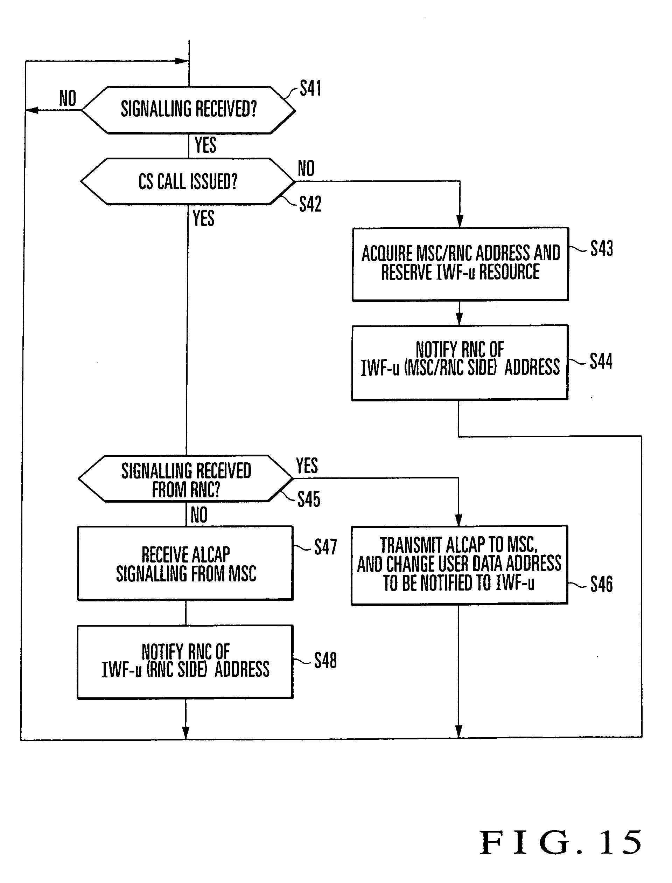

Fig. 15 is a flowchart showing operation of the IWF-u 71 in Fig. 10. In Fig. 15, processes in steps S41 to S48 are the same as those shown in Figs. 8 and 9. Since the decision processes in steps S23 and S28 are omitted and the number of decision processes decrease, the process by the IWF-u 71 can be reduced.

As described above, according to the second embodiment, since the control signal transmission/reception sections 61 to 63 in the RNC 6 control signalling for reserving the resources of the IWF-us 71 and 72, the IWF-c 31 need not decode RANAP signalling and need not terminate any SCCP connection. Since the IWF-c 31 and the IWF-us 71 and 72 become irrelevant to each other, flexibility can also be ensured for implementation, and the IWF-us 71 and 72 can be easily implemented in the RNC 6.

As has been described above, the IWF device 3 or 7 according to the above embodiments is divided into a C-Plane device for controlling signalling and a U-Plane device for controlling user data, and thus can adopt a configuration with high scalability. The RNC 1 or 6 can also adopt a configuration with high scalability. Note that the IWF device 3 or 7 can be applied not only when it is connected between different physical lines but also when different intermediate protocols are used for the same physical line.

## Claims

1. A protocol conversion device which is connected between a first device and a second device that use different physical lines, **characterized by** comprising:
a C-Plane device which controls signalling between the first device and the second device; and
a U-Plane device which controls transfer of user data between the first device and the second device.

2. A protocol conversion device according to claim 1, **characterized in that**
said C-Plane device comprises a resource management unit which transmits a second resource request to said U-Plane device when a first resource request to reserve a user data resource is received from the first device, and
said U-Plane device comprises a control unit which reserves the user data resource in said U-Plane device when the second resource request is received.

3. A protocol conversion device according to claim 2, **characterized in that** the resource management unit acquires a first parameter which is contained in the first resource request and used to transfer the user data in the first device, and adds the parameter to the second resource request.

4. A protocol conversion device according to claim 3, **characterized in that**
the control unit transmits to said C-Plane device a resource reservation notification to which a second parameter for transferring the user data in said U-Plane device is added after a resource is reserved, and
the resource management unit acquires the second parameter from the received resource reservation notification, and transfers to the second device a first resource request obtained by rewriting the first parameter contained in the first resource request with the second parameter.

5. A protocol conversion device according to claim 1, **characterized in that** said U-Plane device comprises a resource management unit which reserves a user data resource in said U-Plane device when a third resource request to reserve the user data resource is received from the second device.

6. A protocol conversion device according to claim 5, **characterized in that** the resource management unit acquires parameters which are contained in the third resource request and used to transfer the user data in the first device and the second device.

7. A protocol conversion device according to claim 5, **characterized in that** the second device transmits the third resource request to said U-Plane device when a fourth resource request to reserve the user data resource is received from the first device.

8. A protocol conversion device according to claim 1, **characterized in that**
the first device is at least one of an MSC (Mobile Switching Center) and an SGSN [Serving GPRS (General Packet Radio Service) Support Node] using an ATM (Asynchronous Transfer Mode) transport protocol stack, and
the second device is a base station control device using an IP (Internet Protocol) transport protocol stack.

9. A protocol conversion device according to claim 8, **characterized in that** SCCP (Signalling Connection Control Part) connections are set between said C-Plane device and said at least one of the MSC and the SGSN and between said C-Plane device and the base station control device.

10. A protocol conversion device according to claim 9, **characterized in that**
the base station control device comprises a plurality of signalling control devices for transmitting/receiving a control signal, and
said C-Plane device stores an SCCP correspondence table which makes a number of each signalling control device and an SCCP connection correspond to each other, and when signalling is received from said at least one of the MSC and the SGSN, selects one of the signalling control devices on the basis of the SCCP correspondence table.

11. A protocol conversion method applied when a first device and a second device that use different physical lines are connected, **characterized by** comprising:
the first step of controlling signalling between the first device and the second device by a C-Plane device; and
the second step of controlling transfer of user data between the first device and the second device by a U-Plane device which is arranged independently of the C-Plane device.

12. A protocol conversion method according to claim 11, **characterized in that** the first step comprises
the third step of transmitting a first resource request to reserve a user data resource from the first device to the C-Plane device,
the fourth step of transmitting a second resource request to the U-Plane device when the C-Plane device receives the first resource request, and
the fifth step of reserving the user data resource in the U-Plane device when the U-Plane device receives the second resource request.

13. A protocol conversion method according to claim 12, **characterized in that** the fourth step comprises the step of acquiring a first parameter which is contained in the first resource request and used to transfer the user data in the first device, and adding the parameter to the second resource request.

14. A protocol conversion method according to claim 13, **characterized in that** the first step comprises
the sixth step of transmitting to the C-Plane device a resource reservation notification to which a second parameter for transferring the user data in the U-Plane device is added after the fifth step, and
the seventh step of acquiring the second parameter from the received resource reservation notification, and transferring to the second device a first resource request obtained by rewriting the first parameter contained in the first resource request with the second parameter.

15. A protocol conversion method according to claim 11, **characterized in that** the first step comprises
the eighth step of transmitting a third resource request to reserve a user data resource from the second device to the U-Plane device, and
the ninth step of reserving the user data resource in the U-Plane device when the U-Plane device receives the third resource request.

16. A protocol conversion method according to claim 15, **characterized in that** the ninth step comprises the step of acquiring parameters which are contained in the third resource request and used to transfer the user data in the first device and the second device.

17. A protocol conversion method according to claim 15, **characterized in that**
the first step further comprises the 10th step of transmitting a fourth resource request to reserve the user data resource from the first device to the second device before the eighth step, and
the eighth step comprises the step of transmitting the third resource request to the U-Plane device when the second device receives the fourth resource request.

18. A protocol conversion method according to claim 11, **characterized in that**
the first device is at least one of an MSC (Mobile Switching Center) and an SGSN [Serving GPRS (General Packet Radio Service) Support Node] using an ATM (Asynchronous Transfer Mode) transport protocol stack, and
the second device is a base station control device using an IP (Internet Protocol) transport protocol stack.

19. A protocol conversion method according to claim 18, **characterized in that** the first step comprises the 11th step of setting SCCP (Signalling Connection Control Part) connections between the C-Plane device and said at least one of the MSC and the SGSN and between the C-Plane device and the base station control device.

20. A protocol conversion method according to claim 19, **characterized in that** the first step further comprises the 12th step of, when signalling is received from said at least one of the MSC and the SGSN, selecting one of a plurality of signalling control devices on the basis of an SCCP correspondence table which makes a number of each of the signalling control devices of the base station control device and an SCCP connection correspond to each other.

## Amended claims

### Amended claims under Art. 19.1 PCT

1. deleted)

2. (amended) A protocol conversion device which is connected between a first device and a second device that use different physical lines, **characterized by** comprising:
a C-Plane device which controls signalling between the first device and the second device; and
a U-Plane device which controls transfer of user data between the first device and the second device,
said C-Plane device comprising a resource management unit which transmits a second resource request to said U-Plane device when a first resource request to reserve a user data resource is received from the first device, and
said U-Plane device comprising a control unit which reserves the user data resource in said U-Plane device when the second resource request is received.

3. A protocol conversion device according to claim 2, **characterized in that** the resource management unit acquires a first parameter which is contained in the first resource request and used to transfer the user data in the first device, and adds the parameter to the second resource request.

4. A protocol conversion device according to claim 3, **characterized in that**
the control unit transmits to said C-Plane device a resource reservation notification to which a second parameter for transferring the user data in said U-Plane device is added after a resource is reserved, and
the resource management unit acquires the second parameter from the received resource reservation notification, and transfers to the second device a first resource request obtained by rewriting the first parameter contained in the first resource request with the second parameter.

5. (amended) A protocol conversion device which is connected between a first device and a second device that use different physical lines, **characterized by** comprising:
a C-Plane device which controls signalling between the first device and the second device; and
a U-Plane device which controls transfer of user data between the first device and the second device,
said U-Plane device comprising a resource management unit which reserves a user data resource in said U-Plane device when a third resource request to reserve the user data resource is received from the second device.

6. A protocol conversion device according to claim 5, **characterized in that** the resource management unit acquires parameters which are contained in the third resource request and used to transfer the user data in the first device and the second device.

7. A protocol conversion device according to claim 5, **characterized in that** the second device transmits the third resource request to said U-Plane device when a fourth resource request to reserve the user data resource is received from the first device.

8. (amended) A protocol conversion device which is connected between a first device and a second device that use different physical lines, **characterized by** comprising:
a C-Plane device which controls signalling between the first device and the second device; and
a U-Plane device which controls transfer of user data between the first device and the second device,
wherein the first device is at least one of an MSC (Mobile Switching Center) and an SGSN [Serving GPRS (General Packet Radio Service) Support Node] using an ATM (Asynchronous Transfer Mode) transport protocol stack, and
the second device is a base station control device using an IP (Internet Protocol) transport protocol stack.

9. A protocol conversion device according to claim 8, **characterized in that** SCCP (Signalling Connection Control Part) connections are set between said C-Plane device and said at least one of the MSC and the SGSN and between said C-Plane device and the base station control device.

10. A protocol conversion device according to claim 9, **characterized in that**
the base station control device comprises a plurality of signalling control devices for transmitting/receiving a control signal, and
said C-Plane device stores an SCCP correspondence table which makes a number of each signalling control device and an SCCP connection correspond to each other, and when signalling is received from said at least one of the MSC and the SGSN, selects one of the signalling control devices on the basis of the SCCP correspondence table.

11. (deleted)

12. (amended) A protocol conversion method applied when a first device and a second device that use different physical lines are connected, **characterized by** comprising:
the first step of controlling signalling between the first device and the second device by a C-Plane device; and
the second step of controlling transfer of user data between the first device and the second device by a U-Plane device which is arranged independently of the C-Plane device,
the first step comprising
the third step of transmitting a first resource request to reserve a user data resource from the first device to the C-Plane device,
the fourth step of transmitting a second resource request to the U-Plane device when the C-Plane device receives the first resource request, and
the fifth step of reserving the user data resource in the U-Plane device when the U-Plane device receives the second resource request.

13. A protocol conversion method according to claim 12, **characterized in that** the fourth step comprises the step of acquiring a first parameter which is contained in the first resource request and used to transfer the user data in the first device, and adding the parameter to the second resource request.

14. A protocol conversion method according to claim 13, **characterized in that** the first step comprises
the sixth step of transmitting to the C-Plane device a resource reservation notification to which a second parameter for transferring the user data in the U-Plane device is added after the fifth step, and
the seventh step of acquiring the second parameter from the received resource reservation notification, and transferring to the second device a first resource request obtained by rewriting the first parameter contained in the first resource request with the second parameter.

15. (amended) A protocol conversion method applied when a first device and a second device that use different physical lines are connected, **characterized by** comprising:
the first step of controlling signalling between the first device and the second device by a C-Plane device; and
the second step of controlling transfer of user data between the first device and the second device by a U-Plane device which is arranged independently of the C-Plane device,
the first step comprising
the eighth step of transmitting a third resource request to reserve a user data resource from the second device to the U-Plane device, and
the ninth step of reserving the user data resource in the U-Plane device when the U-Plane device receives the third resource request.

16. A protocol conversion method according to claim 15, **characterized in that** the ninth step comprises the step of acquiring parameters which are contained in the third resource request and used to transfer the user data in the first device and the second device.

17. A protocol conversion method according to claim 15, **characterized in that**
the first step further comprises the 10th step of transmitting a fourth resource request to reserve the user data resource from the first device to the second device before the eighth step, and
the eighth step comprises the step of transmitting the third resource request to the U-Plane device when the second device receives the fourth resource request.

18. (amended) A protocol conversion method applied when a first device and a second device that use different physical lines are connected, **characterized by** comprising:
the first step of controlling signalling between the first device and the second device by a C-Plane device; and
the second step of controlling transfer of user data between the first device and the second device by a U-Plane device which is arranged independently of the C-Plane device,
wherein the first device is at least one of an MSC (Mobile Switching Center) and an SGSN [Serving GPRS (General Packet Radio Service) Support Node] using an ATM (Asynchronous Transfer Mode) transport protocol stack, and
the second device is a base station control device using an IP (Internet Protocol) transport protocol stack.

19. A protocol conversion method according to claim 18, **characterized in that** the first step comprises the 11th step of setting SCCP (Signalling Connection Control Part) connections between the C-Plane device and said at least one of the MSC and the SGSN and between the C-Plane device and the base station control device.

20. A protocol conversion method according to claim 19, **characterized in that** the first step further comprises the 12th step of, when signalling is received from said at least one of the MSC and the SGSN, selecting one of a plurality of signalling control devices on the basis of an SCCP correspondence table which makes a number of each of the signalling control devices of the base station control device and an SCCP connection correspond to each other.
